# EUROPEAN PATENT APPLICATION

(11) **EP 4 844 877 A1**
(43) Date of publication of application: **25.11.2026**
(21) Application number: 24938447.0
(22) Date of filing: 09.08.2024
(51) Int. Cl.: H01M 10/058, H01M 10/0525, H01M 10/052

(54) **BATTERY ASSEMBLING METHOD AND TAB PENETRATING DEVICE**

(30) Priority: 14.05.2024 CN 202410599477
(71) Applicant: Contemporary Amperex Technology Co., Limited, Ningde, Fujian 352100 (CN)
(72) Inventor: AI, Hao, Ningde, Fujian 352100 (CN); SUN, Weiwei, Ningde, Fujian 352100 (CN); HU, Jun, Ningde, Fujian 352100 (CN); ZHANG, Zhongzheng, Ningde, Fujian 352100 (CN); LIN, Xiakuang, Ningde, Fujian 352100 (CN)
(74) Representative: Kraus & Lederer PartGmbB
(86) International application number: PCT/CN2024/111127
(87) International publication number: WO 2025/236433

(57) **Abstract**

The application discloses a battery assembling method and a tab penetrating device. The assembling method comprises: controlling a moving apparatus and a shifting assembly of a tab penetrating device to be in preparation work positions, wherein the shifting assembly comprises a guide piece, and the moving apparatus is used for driving the guide piece, a housing of a battery and an electrode assembly to move relatively, the housing is provided with an accommodating cavity, a through hole communicated with the accommodating cavity and the outside is formed on the housing, the electrode assembly is provided with a tab part, and the guide piece can extend into the through hole to be in contact with the tab part; controlling the shifting assembly and the moving apparatus to move synchronously, so that in the process of the moving apparatus changing the relative positions of the housing, the electrode assembly and the guide piece, the guide piece rotates in the accommodating cavity to change the bending direction of the tab part, such that the tab part extends out of the accommodating cavity by means of the through hole. By means of the present solution, the working stability and reliability of the movement process can be effectively improved, the assembly difficulty of the battery is effectively reduced, and the assembly efficiency and the yield of the battery are effectively improved.

## Description

The present application claims priority to Chinese Patent Application No. 202410599477X, filed on May 14, 2024 and entitled "ASSEMBLY METHOD FOR BATTERY AND TAB-THROUGH DEVICE", which is incorporated herein by reference in its entirety.

### TECHNICAL FIELD

The present application relates to the technical field of batteries, and in particular, to an assembly method for a battery and a tab-through device.

### BACKGROUND

Energy conservation and emission reduction are key to sustainable development, which in turn promotes the adjustment of energy structure and drives the development and application of battery technology. The key to the development of battery technology lies in the electrochemical energy storage technology, which has been widely applied to portable electronics, electric vehicles, and energy storage systems due to its advantages such as high energy density, good cycle capability, high operating voltage, environmental friendliness, and low self-discharge.

The tab part of a battery is a metal conductor that leads the positive electrode and the negative electrode of the battery cell out of the housing; therefore, during the assembly process of the battery, the tab part of the battery needs to be led out of the housing to serve as the contact point for charging and discharging the battery. However, during the assembly process of the battery, when the battery cell of the battery is assembled into the housing, the tab part is easily bent inside the housing and cannot extend out of the housing. This results in a relatively high difficulty in the battery assembly and manufacturing process, and a low yield rate in battery manufacturing.

### SUMMARY

The primary objective of the present application is to provide an assembly method for a battery and a tab-through device, aiming to solve the above technical problems in the prior art.

To solve the above problems, the present application provides an assembly method for a battery, which is implemented on a tab-through device. The assembly method includes: controlling a moving apparatus and a shifting assembly of the tab-through device to be at a preparation station, where the shifting assembly includes a guiding member, and the moving apparatus is configured to drive the guiding member and a housing and an electrode assembly of the battery to move relative to each other; the housing is provided with an accommodating cavity, a through hole communicating the accommodating cavity with an outside is formed in the housing, the electrode assembly is provided with a tab part, and the guiding member is capable of extending into the through hole to come into contact with the tab part; and controlling the shifting assembly and the moving apparatus to move synchronously, such that during a process of the moving apparatus changing relative positions of the housing, the electrode assembly, and the guiding member, the guiding member rotates in the accommodating cavity to change a bending direction of the tab part, thereby enabling the tab part to extend out of the accommodating cavity through the through hole.

According to the above embodiments, the shifting assembly and the moving apparatus are controlled to move, such that the tab part extends out of the accommodating cavity through the through hole. Without affecting or damaging the housing and the tab part, the tab part can be automatically and smoothly guided into the through hole, such that the tab part can smoothly extend out of the housing. Moreover, the shifting assembly and the moving apparatus move synchronously, such that during the process of the moving apparatus changing the relative positions of the housing, the electrode assembly, and the guiding member, the guiding member rotates in the accommodating cavity to change the bending direction of the tab part. This can effectively improve the working stability and reliability during the movement, effectively reduce the assembly difficulty of the battery, and effectively improve the assembly efficiency, the yield rate, and the like of the battery.

In some embodiments, the moving apparatus includes a carrying assembly and a moving assembly. The carrying assembly is configured to drive the electrode assembly to move, and the moving assembly is configured to drive the housing and the guiding member to move relative to each other. The step of controlling the shifting assembly and the moving apparatus to move synchronously includes: controlling, by using the virtual shaft, a transmission mechanism of the carrying assembly, a transmission mechanism of the moving assembly, and a transmission mechanism of the shifting assembly to move synchronously.

Therefore, the use of the virtual shaft facilitates the synchronous movement of the corresponding transmission mechanisms, and improves the reliability and precision of the actions of the carrying assembly, the moving assembly, and the shifting assembly, thereby improving the smoothness of the entire tab-through process. In addition, by introducing the virtual shaft, the total number of shafts that need to be controlled can be reduced, thereby reducing the debugging time and improving production efficiency, among others.

In some embodiments, the step of controlling, by using the virtual shaft, the transmission mechanism of the carrying assembly, the transmission mechanism of the moving assembly, and the transmission mechanism of the shifting assembly to move synchronously includes: coupling the virtual shaft to the transmission mechanism of the moving assembly, and coupling the virtual shaft to the transmission mechanism of the shifting assembly; performing, by using the virtual shaft, linear interpolation on the transmission mechanism corresponding to the carrying assembly to obtain an interpolation path; and controlling, according to the interpolation path, the transmission mechanism of the carrying assembly, the transmission mechanism of the moving assembly, and the transmission mechanism of the shifting assembly to move synchronously.

Therefore, the virtual shaft is coupled to the transmission mechanism of the moving assembly and the transmission mechanism corresponding to the shifting assembly, and the linear interpolation is performed on the transmission mechanism corresponding to the carrying assembly by using the virtual shaft to obtain the interpolation path, thereby achieving the synchronous movement of the transmission mechanisms. This can further improve the reliability and precision of the motion control between the assemblies, and further improve the smoothness of the entire tab-through process and the production efficiency.

In some embodiments, the step of controlling, according to the interpolation path, the transmission mechanism of the carrying assembly, the transmission mechanism of the moving assembly, and the transmission mechanism of the shifting assembly to move synchronously includes: synchronously controlling, according to the interpolation path, the transmission mechanism of the carrying assembly to drive the electrode assembly to move along a linear path, the transmission mechanism of the moving assembly to drive the housing and the guiding member to move away from each other on the linear path, and the transmission mechanism of the shifting assembly to drive the guiding member to rotate.

Therefore, according to the interpolation path, the transmission mechanism of the carrying assembly is controlled to drive the electrode assembly to move along the linear path, and the transmission mechanism of the moving assembly is controlled to drive the housing and the guiding member to move away from each other on the linear path, such that the movement path of each assembly can be simplified, the reliability and precision of the motion control between the assemblies can be improved, and the smoothness of the entire tab-through process, the production efficiency, and the like can be improved.

In some embodiments, the interpolation path includes a first interpolation path and a second interpolation path. The step of synchronously controlling, according to the interpolation path, the transmission mechanism of the carrying assembly to drive the electrode assembly to move along the linear path, the transmission mechanism of the moving assembly to drive the housing and the guiding member to move away from each other on the linear path, and the transmission mechanism of the shifting assembly to drive the guiding member to rotate includes: synchronously controlling, according to the first interpolation path, the transmission mechanism of the carrying assembly to drive the electrode assembly to move along the linear path, the transmission mechanism of the moving assembly to drive the housing and the guiding member to move away from each other on the linear path, and the transmission mechanism of the shifting assembly to drive the guiding member to rotate until the tab part extends along the linear path in the accommodating cavity; and synchronously controlling, according to the second interpolation path, the guiding member to keep the tab part in a state of extending along the linear path, the transmission mechanism of the moving assembly to drive the housing and the guiding member to move away from each other on the linear path, and the transmission mechanism of the carrying assembly to drive the electrode assembly to move along the linear path until the tab part extends out of the accommodating cavity through the through hole.

Therefore, the interpolation path includes the first interpolation path and the second interpolation path. The first-stage motion control may be performed on the transmission mechanism of the carrying assembly, the transmission mechanism of the shifting assembly, and the transmission mechanism of the moving assembly by means of the first interpolation path, and the second-stage motion control may be performed on the transmission mechanism of the carrying assembly, the transmission mechanism of the shifting assembly, and the transmission mechanism of the moving assembly by means of the second interpolation path. This can further improve the reliability and precision of the motion control between the assemblies, and improve the smoothness of the entire tab-through process, the production efficiency, and the like.

In some embodiments, the assembly method further includes: decoupling the virtual shaft from the transmission mechanism of the moving assembly and from the transmission mechanism of the shifting assembly; and controlling, in a decoupled state, the transmission mechanism of the moving assembly, the transmission mechanism of the shifting assembly, and the transmission mechanism of the carrying assembly to reset.

Therefore, by first decoupling the transmission mechanisms of the assemblies from the virtual shaft, the rapid reset of each transmission mechanism can be facilitated.

In some embodiments, before the step of controlling the moving apparatus and the shifting assembly to be at the preparation station, the assembly method includes: acquiring the bending direction of the tab part; and adjusting, according to the bending direction, a deflection direction of the guiding member.

Therefore, by adjusting the deflection direction of the guiding member based on the acquired bending direction of the tab part, the reliability of the deflection adjustment of the tab can be improved, and the smoothness of the entire tab-through process, the production efficiency, and the like can be improved.

In some embodiments, the step of acquiring the bending direction of the tab part includes: determining, in a state where the moving apparatus and the shifting assembly are at an initial position, whether the housing and the electrode assembly are at a station; and acquiring, in response to whether the housing and the electrode assembly are at the station, the bending direction of the tab part.

Therefore, the bending direction of the tab part is acquired after the determination of whether the housing and the electrode assembly are at the station, which makes the entire process of the tab-through device smoother and more reliable, thereby improving the overall working efficiency.

In some embodiments, the step of performing, by using the virtual shaft, the linear interpolation on the transmission mechanism corresponding to the carrying assembly includes: performing, by using the virtual shaft, the linear interpolation on the transmission mechanism corresponding to the carrying assembly when the virtual shaft is at an origin.

Therefore, after the coupling between the virtual shaft and the corresponding transmission mechanisms is completed, the linear interpolation is performed on the transmission mechanism corresponding to the carrying assembly when the virtual shaft is at the origin, such that the finally obtained interpolation path can better meet the actual requirements, thereby improving the working smoothness of the tab-through device, the overall working efficiency, and the like.

To solve the above problems, the present application provides a tab-through device. The tab-through device includes: a moving apparatus, a shifting assembly, and a controller. The moving apparatus is configured to drive a housing and an electrode assembly of a battery to move relative to each other, where the housing is provided with an accommodating cavity, a through hole communicating the accommodating cavity with an outside is formed in the housing, and the electrode assembly is provided with a tab part. The shifting assembly includes a guiding member, the guiding member is capable of extending into the through hole to come into contact with the tab part, and the moving apparatus is further configured to drive the guiding member, the housing, and the electrode assembly to move relative to each other. The controller is configured to perform the above assembly method, such that the tab part extends out of the accommodating cavity through the through hole.

### BRIEF DESCRIPTION OF THE DRAWINGS

To more clearly illustrate the technical solutions in embodiments of the present application or the prior art, the drawings required for describing the embodiments will be briefly introduced below. Apparently, the drawings in the following description are merely some embodiments of the present application. For those of ordinary skill in the art, other drawings can be obtained based on these drawings without creative efforts.
FIG. 1 is a schematic diagram of an exploded structure of a battery according to one or more embodiments of the present application;
FIG. 2 is a schematic structural diagram of a tab-through device according to one or more embodiments of the present application;
FIG. 3 is a schematic structural diagram of a guiding member inserted into a housing according to one or more embodiments of the present application;
FIG. 4 is a cross-sectional schematic structural diagram of the structure shown in FIG. 3 in an A-A direction;
FIG. 5 is a schematic flowchart of an assembly method for a battery according to one or more embodiments of the present application;
FIG. 6 is a schematic flowchart of control according to an interpolation path in an assembly method according to one or more embodiments of the present application; and
FIG. 7 is a schematic flowchart of the assembly method shown in FIG. 5 before step S501.

Reference numerals: tab-through device 10; moving apparatus 100; moving assembly 110; carrying assembly 120; shifting assembly 200; guiding member 210; battery 20; housing 21; accommodating cavity 22; through hole 23; electrode assembly 24; tab part 25; bottom cover 26; linear path F.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, the technical terms such as "first" and "second" are only used to distinguish different objects and should not be interpreted as indicating or implying the relative importance or implicitly indicating the number, specific order, or priority of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

With the development of battery technology, batteries have been applied in an increasing number of fields and are gradually replacing traditional fossil energy in the automotive power sector. A battery can store chemical energy and controllably convert the chemical energy into electric energy. In rechargeable batteries, after discharge, the active substance can be activated through charging for continued use.

A battery refers to a cup, a trough, or other container-or part of the space within a composite container-containing an electrolyte solution and metal electrodes to generate a current; it is an apparatus capable of converting chemical energy into electric energy. With the development of science and technology, batteries-which offer advantages such as ease of carrying, simple and convenient charging/discharging operations, and long-term stable power supply-have been widely applied in fields such as automobiles, household appliances, and aerospace.

The tab part of a battery is a metal conductor that leads the positive electrode and the negative electrode of the battery cell out of the housing; therefore, during the assembly process of the battery, the tab part of the battery needs to be led out of the housing to serve as the contact point for charging and discharging the battery. However, during the assembly process of the battery, when the battery cell of the battery is assembled into the housing, the tab part is easily bent inside the housing and cannot extend out of the housing. This results in a relatively high difficulty in the battery assembly and manufacturing process, and a low yield rate in battery manufacturing.

To achieve the precise insertion of the electrode assembly into the housing and to smoothly extend the tab part from inside the housing to the outside, the tab part can be guided during the insertion of the electrode assembly into the housing, such that the tab part extends smoothly from inside the housing to the outside.

Based on the above considerations, the present application provides an assembly method for a battery and a tab-through device. During the process of a moving apparatus changing the relative positions of the housing, the electrode assembly, and the guiding member, the guiding member of the shifting assembly changes the bending direction of the tab part, thereby being capable of guiding the tab part to extend out of the housing through a through hole in the housing. Such a design enables the tab part of the battery to be guided to pass through the through hole when the electrode assembly of the battery is inserted into the housing, thereby effectively improving the working stability and reliability during the movement, effectively reducing the assembly difficulty of the battery, and effectively improving the assembly efficiency, the yield rate, and the like of the battery.

Illustratively, an exemplary description of a battery is provided below.

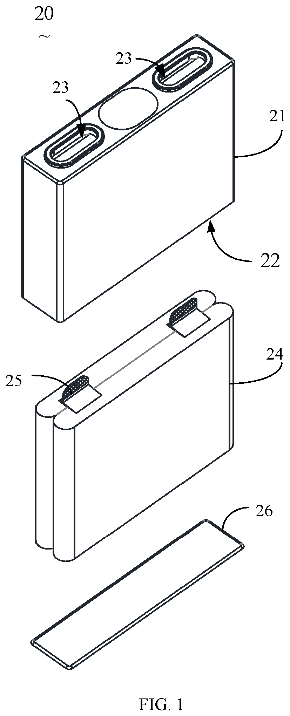

As shown in FIG. 1, FIG. 1 is a schematic diagram of an exploded structure of a battery according to one or more embodiments of the present application.

The battery 20 may be an energy storage apparatus. The energy storage apparatus includes an energy storage container, an energy storage electrical cabinet, and the like.

In some embodiments, the battery 20 may include a housing 21, a bottom cover 26, and an electrode assembly 24. The battery 20 may further include other functional components.

In some embodiments, the housing 21 is configured to encapsulate the electrode assembly 24, the electrolyte, and other components.

The housing 21 may be provided with an open end, a wall of the housing 21 opposite to the open end may be provided with a post terminal, the post terminal may be provided with a through hole 23, and the housing 21 and the bottom cover 26 may be connected to form an accommodating cavity 22 in communication with the through hole 23. An active substance-coated part of the electrode assembly 24 may be disposed in the housing 21, and a tab part 25 of the electrode assembly 24 passes through the through hole 23 and is connected to a side of the post terminal facing away from the accommodating cavity 22.

The bottom cover 26 may be lidded onto the open end of the housing 21 to isolate the internal environment of the battery 20 from components of the external environment. Without limitation, the shape of the bottom cover 26 may be adapted to the shape of the open end to match the housing 21. Optionally, the bottom cover 26 may be made of a material with a certain hardness and strength (for example, an aluminum alloy), such that the bottom cover 26 is not easily deformed when being squeezed or collided. This enables the battery 20 to have higher structural strength, and the safety performance can also be improved.

In some embodiments, a top part of the housing 21 may be provided with components such as the post terminal. The post terminal may be configured to be electrically connected to the electrode assembly 24 to output or input the electric energy of the battery 20. In some embodiments, the housing 21 may also be provided with a pressure relief mechanism for releasing the internal pressure when the internal pressure or temperature of the battery 20 reaches a threshold.

The housing 21 is an assembly configured in conjunction with the bottom cover 26 to form the internal environment of the battery 20. The formed internal environment can be used to accommodate the electrode assembly 24, the electrolytic solution, and other components. The housing 21 and the bottom cover 26 may be independent components. An open end may be formed in the housing 21, and the bottom cover 26 is lidded onto the open end to form the internal environment of the battery 20. In other embodiments, the shape of the housing 21 may be determined based on the specific shape and dimension of the electrode assembly 24. The housing 21 may be made of various materials, for example, including but not limited to copper, iron, aluminum, stainless steel, aluminum alloy, and plastic.

The electrode assembly 24 is a component where the electrochemical reaction occurs in the battery 20. One or more electrode assemblies 24 may be accommodated in the housing 21.

In some embodiments, the electrode assembly 24 is provided with a tab part 25, and the tab part 25 can conduct current out from the electrode assembly 24. The tab part 25 includes a positive electrode tab part 25 and a negative electrode tab part 25. The positive electrode tab part 25 and the negative electrode tab part 25 may be located together at one end of the main body part or respectively at two ends of the main body part. During the charging and discharging process of the battery 20, the positive electrode active substance and the negative electrode active substance react with the electrolytic solution, and the tab part 25 is connected to the post terminal to form a current circuit.

In some embodiments, the electrode assembly 24 includes a positive electrode, a negative electrode, and a separator. During the charging and discharging process of the battery 20, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector is provided with two surfaces opposite to each other in its own thickness direction, and the positive electrode active material is disposed on either or both of the two opposite surfaces of the positive electrode current collector.

As an example, a metal foil or a composite current collector may be used as the positive electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for the battery 20 may also be used. These positive electrode active materials may be used alone or in a combination of two or more. Examples of the lithium-containing phosphate may include, but are not limited to, at least one of lithium iron phosphate, a composite material of lithium iron phosphate and carbon, lithium manganese phosphate, a composite material of lithium manganese phosphate and carbon, lithium manganese iron phosphate, and a composite material of lithium manganese iron phosphate and carbon. Examples of the lithium transition metal oxide may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof.

In some embodiments, the negative electrode may be a negative electrode plate, and the negative electrode plate may include a negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, foam alloy, foam carbon, or the like. The composite current collector may include a polymer material base layer and a metal layer. The composite current collector may be formed by forming a metal material (copper, copper alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, or polyethylene).

As an example, the negative electrode plate may include a negative electrode current collector and a negative electrode active material disposed on at least one surface of the negative electrode current collector.

As an example, the negative electrode current collector is provided with two surfaces opposite to each other in its own thickness direction, and the negative electrode active material is disposed on either or both of the two opposite surfaces of the negative electrode current collector.

As an example, the negative electrode active material may be a negative electrode active material known in the art for use in the battery 20. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for the battery 20 may also be used. These negative electrode active materials may be used alone or in combination of two or more.

In some embodiments, the material of the positive electrode current collector may be aluminum, and the material of the negative electrode current collector may be copper.

In some embodiments, the separator is a separation film. The present application does not particularly limit the type of the separation film, and any porous-structure separation film known to have good chemical stability and mechanical stability may be selected.

As an example, the main material of the separation film may be selected from at least one of glass fiber, non-woven fabric, polyethylene, polypropylene, polyvinylidene fluoride, and ceramic. The separation film may be a single-layer film or a multi-layer composite film, which is not specified. When the separation film is a multi-layer composite film, the materials of layers may be the same or different, which is not specified. The separator may be a separate component located between the positive electrode and the negative electrode, or may be attached to the surfaces of the positive electrode and the negative electrode.

In some embodiments, the separator is a solid-state electrolyte. The solid-state electrolyte is disposed between the positive electrode and the negative electrode, serving both to transport ions and to isolate the positive electrode from the negative electrode.

In some embodiments, the battery 20 further includes an electrolyte that serves to conduct ions between the positive electrode and the negative electrode. The present application does not specifically limit the type of the electrolyte, which may be selected based on requirements. The electrolyte may be liquid-state, gel-state, or solid-state.

The liquid-state electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a skeleton network with a polymer as an electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may be one or more of an oxide solid electrolyte (crystalline perovskite, sodium superionic conductor, garnet, and amorphous LiPON thin film), a sulfide solid electrolyte (crystalline lithium superionic conductor (lithium germanium phosphorus sulfur or argyrodite), and amorphous sulfide), a halide solid electrolyte, a nitride solid electrolyte, and a hydride solid electrolyte.

As an example, the composite solid-state electrolyte is formed by adding an inorganic solid-state electrolyte filler to the polymer solid electrolyte.

In some embodiments, the electrode assembly 24 is of a wound structure. The positive electrode plate and the negative electrode plate are wound to form a wound structure.

In some embodiments, the electrode assembly 24 and the housing 21 are assembled by a tab-through device 10 to form the battery 20.

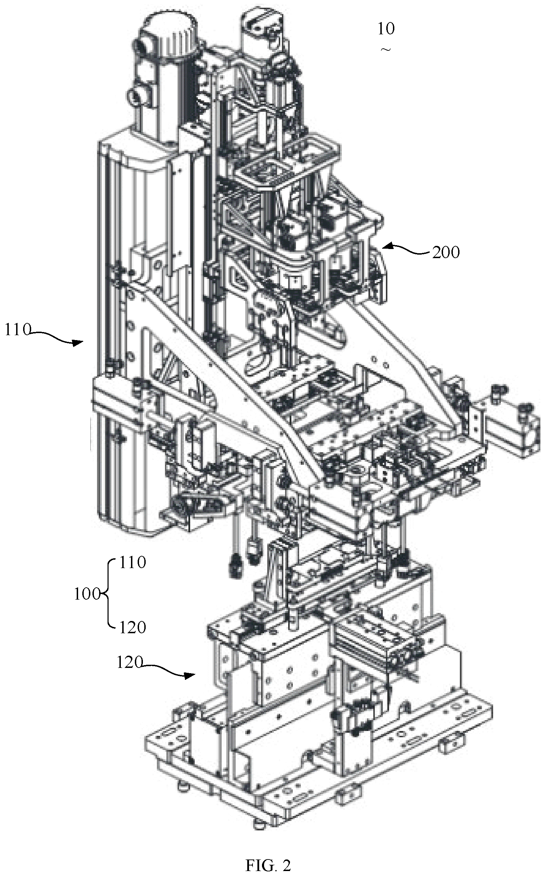

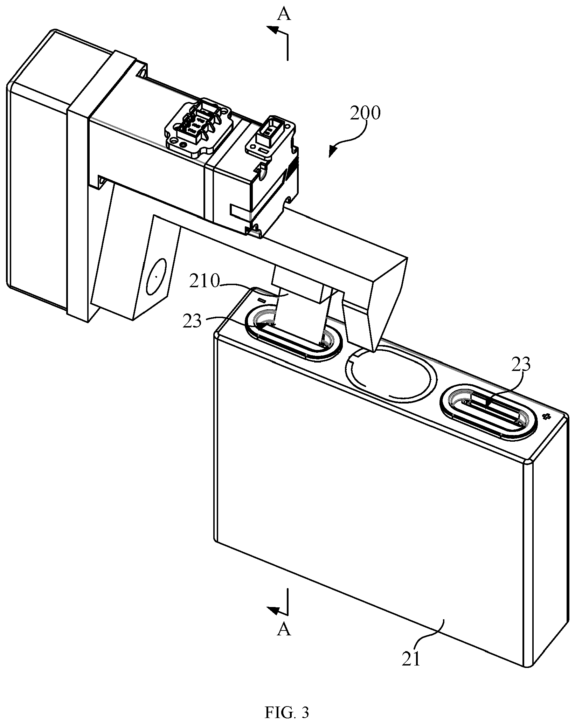

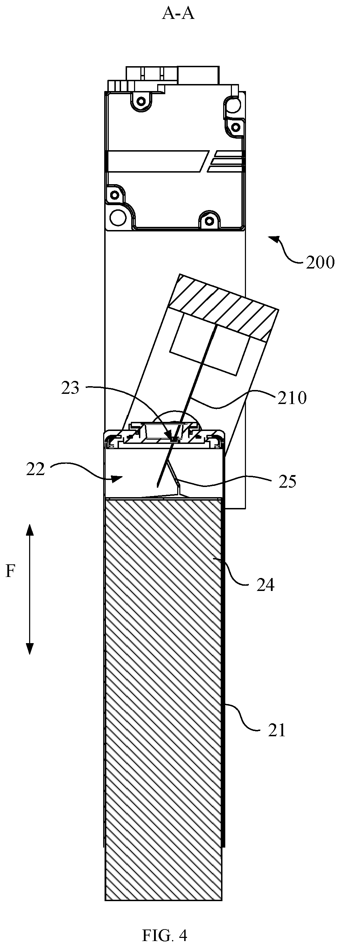

Referring to FIGs. 2 to 4, FIG. 2 is a schematic structural diagram of a tab-through device 10 according to one or more embodiments of the present application; FIG. 3 is a schematic structural diagram of a guiding member 210 inserted into a housing 21 according to one or more embodiments of the present application; FIG. 4 is a cross-sectional schematic structural diagram of the structure shown in FIG. 3 in an A-A direction.

In the present application, the tab-through device 10 of the battery 20 is exemplarily described below. The tab-through device 10 may be configured to assemble the electrode assembly 24 into the housing 21 from an open end of the housing 21.

The tab-through device 10 includes a moving apparatus 100 and a shifting assembly 200. The shifting assembly 200 includes a guiding member 210, and the guiding member 210 is capable of extending into the through hole 23 to come into contact with the tab part 25. The moving apparatus 100 is further configured to drive the guiding member 210, the housing 21, and the electrode assembly 24 to move relative to each other, and the guiding member 210 rotates in the accommodating cavity 22 to change the bending direction of the tab part 25, thereby enabling the tab part 25 to extend out of the accommodating cavity 22 through the through hole 23.

The moving apparatus 100 may be separately connected to the housing 21, the electrode assembly 24, and the shifting assembly 200, and the moving apparatus 100 may be configured to drive the housing 21, the shifting assembly 200, and/or the electrode assembly 24 to move, thereby enabling the guiding member 210, the housing 21, and the electrode assembly 24 to move relative to each other. Illustratively, the guiding member 210 and the electrode assembly 24 do not move, and the moving apparatus 100 drives the housing 21 to move simultaneously relative to the guiding member 210 and the electrode assembly 24; or the electrode assembly 24 does not move, and the moving apparatus 100 drives the housing 21 and the guiding member 210 to move; or the housing 21 does not move, and the moving apparatus 100 drives the guiding member 210 and the electrode assembly 24 to move; or the moving apparatus 100 simultaneously drives the housing 21, the guiding member 210, and the electrode assembly 24 to move. The shifting assembly 200 may further include a transmission mechanism. The transmission mechanism is connected to the guiding member 210, and the transmission mechanism may be configured to drive the guiding member 210 to rotate. The guiding member 210 may be in a sheet shape. The guiding member 210 comes into contact with the tab part 25 after extending into the through hole 23, such that the tab part 25 can overlap onto the guiding member 210, so as to adjust the deflection angle of the tab part 25 by means of the rotation of the guiding member 210, thereby enabling the tab part 25 to extend out of the accommodating cavity 22 during the relative movement between the housing 21, the guiding member 210, and the electrode assembly 24.

In some embodiments, the moving apparatus 100 may include a carrying assembly 120 and a moving assembly 110. The carrying assembly 120 is configured to drive the electrode assembly 24 to move, and the moving assembly 110 is configured to drive the housing 21 and the guiding member 210 to move relative to each other. The carrying assembly 120 may be configured to carry the electrode assembly 24, and the carrying assembly 120 may drive the electrode assembly 24 to move up and down along a linear path F by means of a transmission mechanism. The moving assembly 110 can fix the housing 21 and drive the housing 21 to move up and down along the linear path F by means of a transmission mechanism, and/or the moving assembly 110 can be connected to the shifting assembly 200 and drive the shifting assembly 200 to move up and down along the linear path F by means of the transmission mechanism, such that the guiding member 210, the housing 21, and the electrode assembly 24 can be driven to move relative to each other by the moving apparatus 100.

The linear path F may be a movement path extending in the direction of gravity. In the embodiments, the electrode assembly 24 carried by the carrying assembly 120 may be located below the housing 21 in the direction of gravity, and the moving apparatus 100 driving the guiding member 210, the housing 21, and the electrode assembly 24 to move relative to each other may include the following several implementations: the electrode assembly 24 and the guiding member 210 do not move on the linear path F, and the moving assembly 110 drives the housing 21 to move downward toward the electrode assembly 24; or the electrode assembly 24 does not move on the linear path F, and the moving assembly 110 drives the housing 21 to move downward while driving the guiding member 210 to move upward; or the housing 21 does not move on the linear path F, the moving assembly 110 drives the guiding member 210 to move upward, and the carrying assembly 120 drives the electrode assembly 24 to move upward; or the guiding member 210 does not move on the linear path F, the moving assembly 110 drives the housing 21 to move downward, and the carrying assembly 120 drives the electrode assembly 24 to move upward; or the moving assembly 110 drives the housing 21 to move downward while driving the guiding member 210 to move upward, and the carrying assembly 120 drives the electrode assembly 24 to move upward.

The tab-through device 10 according to the present application further includes a controller, and the moving apparatus 100 and the shifting assembly 200 can be controlled by the controller. Specifically, the controller can be configured to perform the assembly method for the battery 20 according to any one of the following embodiments, so as to enable the tab part 25 to extend out of the accommodating cavity 22 through the through hole 23 in the housing 21.

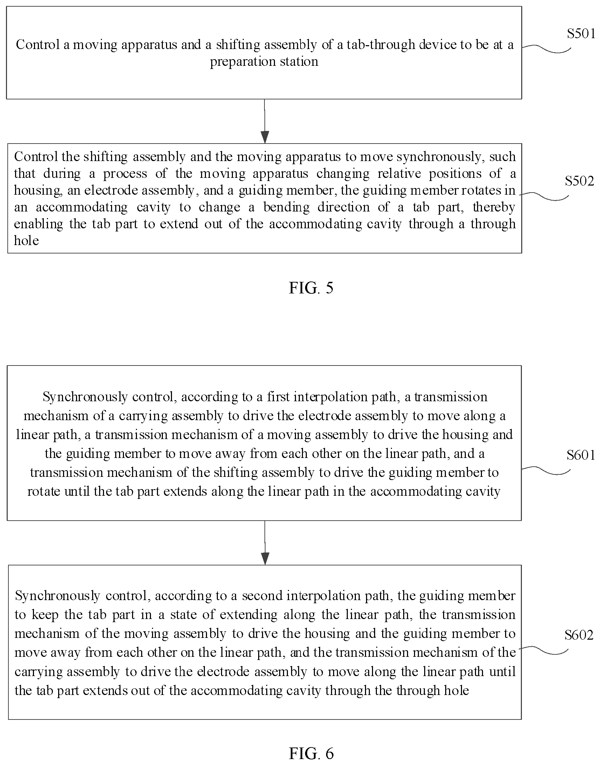

Referring to FIG. 5, FIG. 5 is a schematic flowchart of an assembly method for a battery 20 according to one or more embodiments of the present application. Specifically, the following steps S501 and S502 are included.

In step S501, a moving apparatus and a shifting assembly of a tab-through device are controlled to be at a preparation station.

The shifting assembly 200 includes a guiding member 210, and the moving apparatus 100 is configured to drive the guiding member 210 and a housing 21 and an electrode assembly 24 of the battery 20 to move relative to each other. The housing 21 is provided with an accommodating cavity 22, a through hole 23 communicating the accommodating cavity 22 with the outside is formed in the housing 21, the electrode assembly 24 is provided with a tab part 25, and the guiding member 210 is capable of extending into the through hole 23 to come into contact with the tab part 25. The preparation station may be set based on the actual situation. Illustratively, the preparation station may be a position where the guiding member 210 of the shifting assembly 200 just extends into the through hole 23 of the housing 21; or the preparation station may be a position where the guiding member 210 of the shifting assembly 200 extends into the housing 21 and just comes into contact with the tab part 25, or the like. Before the moving apparatus 100 and the shifting assembly 200 are controlled to move to the preparation station, the moving apparatus 100 and the shifting assembly 200 may be located at the initial station, and can receive the housing 21 and the electrode assembly 24 at the initial station. After the housing 21 and the electrode assembly 24 are mounted, the moving apparatus 100 and the shifting assembly 200 can be controlled to be at the preparation station.

In step S502, the shifting assembly and the moving apparatus are controlled to move synchronously, such that during the process of the moving apparatus changing the relative positions of the housing, the electrode assembly, and the guiding member, the guiding member rotates in the accommodating cavity to change the bending direction of the tab part, thereby enabling the tab part to extend out of the accommodating cavity through the through hole.

The shifting assembly 200 and the moving apparatus 100 may each be provided with a transmission mechanism. The guiding member 210 can be driven to rotate by controlling the transmission mechanism of the shifting assembly 200, and the relative positions of the housing 21, the electrode assembly 24, and the guiding member 210 can be changed by controlling the transmission mechanism of the moving apparatus 100. In the embodiments, the process of the moving apparatus 100 changing the relative positions of the housing 21, the electrode assembly 24, and the guiding member 210 may include the following situations: the guiding member 210 and the electrode assembly 24 do not move, and the moving apparatus 100 drives the housing 21 to move simultaneously relative to the guiding member 210 and the electrode assembly 24; or the electrode assembly 24 does not move, and the moving apparatus 100 drives the housing 21 and the guiding member 210 to move; or the housing 21 does not move, and the moving apparatus 100 drives the guiding member 210 and the electrode assembly 24 to move; or the moving apparatus 100 simultaneously drives the housing 21, the guiding member 210, and the electrode assembly 24 to move. During the process of the moving apparatus 100 changing the relative positions of the housing 21, the electrode assembly 24, and the guiding member 210, the guiding member 210 rotates in the accommodating cavity 22 to change the bending direction of the tab part 25, which can be understood as: throughout the process of the moving apparatus 100 changing the relative positions of the housing 21, the electrode assembly 24, and the guiding member 210, the guiding member 210 is in a rotating state until the bending direction of the tab part 25 is changed and the tab part 25 extends out of the accommodating cavity 22 through the through hole 23; or during part of the process of the moving apparatus 100 changing the relative positions of the housing 21, the electrode assembly 24, and the guiding member 210, the guiding member 210 is in a rotating state to change the bending direction of the tab part 25, and after the bending direction of the tab part 25 is adjusted to a preset state, the guiding member 210 does not rotate, as long as the tab part 25 remains in the preset state.

According to the above embodiments, the shifting assembly 200 and the moving apparatus 100 are controlled to move, such that the tab part 25 extends out of the accommodating cavity 22 through the through hole 23. Without affecting or damaging the housing 21 and the tab part 25, the tab part 25 can be automatically and smoothly guided into the through hole 23, such that the tab part 25 can smoothly extend out of the housing 21. Moreover, the shifting assembly 200 and the moving apparatus 100 move synchronously, such that during the process of the moving apparatus 100 changing the relative positions of the housing 21, the electrode assembly 24, and the guiding member 210, the guiding member 210 rotates in the accommodating cavity 22 to change the bending direction of the tab part 25. This can effectively improve the working stability and reliability during the movement, effectively reduce the assembly difficulty of the battery 20, and effectively improve the assembly efficiency, the yield rate, and the like of the battery 20.

In some embodiments, the moving apparatus 100 includes a carrying assembly 120 and a moving assembly 110. The carrying assembly 120 is configured to drive the electrode assembly 24 to move, and the moving assembly 110 is configured to drive the housing 21 and the guiding member 210 to move relative to each other. The step of controlling the shifting assembly 200 and the moving apparatus 100 to move synchronously includes: controlling, by using a virtual shaft, a transmission mechanism of the carrying assembly 120, a transmission mechanism of the moving assembly 110, and the transmission mechanism of the shifting assembly 200 to move synchronously.

The carrying assembly 120 may be configured to carry the electrode assembly 24, and the carrying assembly 120 may drive the electrode assembly 24 to move along the linear path F by means of the transmission mechanism. The moving assembly 110 can fix the housing 21 and drive the housing 21 to move along the linear path F by means of the transmission mechanism, and/or the moving assembly 110 can be connected to the shifting assembly 200 and drive the shifting assembly 200 to move along the linear path F by means of the transmission mechanism, such that the guiding member 210, the housing 21, and the electrode assembly 24 can be driven to move relative to each other by the moving apparatus 100.

A real shaft refers to a shaft of a motor with an actual mechanical structure, and a virtual shaft is a reference shaft calculated by an algorithm to reflect the motion characteristics of the motor. After the virtual shaft is coupled to the real shaft, the real shaft can be dynamically controlled in real time. By controlling the virtual shaft to operate according to the preset parameters, the real shaft can be controlled to operate according to the preset parameters, and the transmission mechanism of the carrying assembly 120, the transmission mechanism of the moving assembly 110, and the transmission mechanism of the shifting assembly 200 move differently. The preset parameters corresponding to the real shaft may include the position, speed, and acceleration of the motor servo shaft.

During the assembly process of the battery 20, the transmission mechanism of the carrying assembly 120, the transmission mechanism of the moving assembly 110, and the transmission mechanism of the shifting assembly 200 need to move synchronously. By referencing the virtual shaft, the synchronous movement of the corresponding transmission mechanisms is facilitated, and the reliability and precision of the actions of the carrying assembly 120, the moving assembly 110, and the shifting assembly 200 are improved, thereby improving the smoothness of the entire tab-through process. In addition, by introducing the virtual shaft, the total number of shafts that need to be controlled can be reduced, thereby reducing the debugging time and improving production efficiency, among others.

Further, the step of controlling, by using the virtual shaft, the transmission mechanism of the carrying assembly 120, the transmission mechanism of the moving assembly 110, and the transmission mechanism of the shifting assembly 200 to move synchronously includes: coupling the virtual shaft to the transmission mechanism of the moving assembly 110, and coupling the virtual shaft to the transmission mechanism of the shifting assembly 200; performing, by using the virtual shaft, linear interpolation on the transmission mechanism corresponding to the carrying assembly 120 to obtain an interpolation path; and controlling, according to the interpolation path, the transmission mechanism of the carrying assembly 120, the transmission mechanism of the moving assembly 110, and the transmission mechanism of the shifting assembly 200 to move synchronously. The virtual shaft may be coupled to the transmission mechanism of the moving assembly 110 via a virtual gear, and coupled to the transmission mechanism of the shifting assembly 200 via a virtual gear. After the virtual shaft is separately coupled to the transmission mechanism of the moving assembly 110 and the transmission mechanism of the shifting assembly 200, the virtual shaft is then linearly coupled to the transmission mechanism corresponding to the carrying assembly 120. Thus, the formed interpolation path can be associated with the transmission mechanism of the moving assembly 110, the transmission mechanism of the shifting assembly 200, and the transmission mechanism corresponding to the carrying assembly 120 via the virtual shaft, so as to facilitate the control of the transmission mechanism of the carrying assembly 120, the transmission mechanism of the moving assembly 110, and the transmission mechanism of the shifting assembly 200 to move synchronously according to the interpolation path.

Therefore, the virtual shaft is coupled to the transmission mechanism of the moving assembly 110 and the transmission mechanism corresponding to the shifting assembly 200, and the linear interpolation is performed on the transmission mechanism corresponding to the carrying assembly 120 by using the virtual shaft to obtain the interpolation path, thereby achieving the synchronous movement of the transmission mechanisms. This can further improve the reliability and precision of the motion control between the assemblies, and further improve the smoothness of the entire tab-through process and the production efficiency.

Further, the step of performing, by using the virtual shaft, the linear interpolation on the transmission mechanism corresponding to the carrying assembly 120 includes: performing, by using the virtual shaft, the linear interpolation on the transmission mechanism corresponding to the carrying assembly 120 when the virtual shaft is at an origin. After the virtual shaft is coupled to the transmission mechanism of the moving assembly 110 and the transmission mechanism of the shifting assembly 200, when it is determined that the coupling result meets the requirements, the virtual shaft can be controlled to return to the origin, and the result is confirmed. After it is confirmed that the virtual shaft is at the origin, the linear interpolation is performed on the transmission mechanism corresponding to the carrying assembly 120 by using the virtual shaft, such that the finally obtained interpolation path can better meet the actual requirements, thereby improving the working smoothness of the tab-through device 10, the overall working efficiency, and the like.

In some embodiments, the step of controlling, according to the interpolation path, the transmission mechanism of the carrying assembly 120, the transmission mechanism of the moving assembly 110, and the transmission mechanism of the shifting assembly 200 to move synchronously includes: synchronously controlling, according to the interpolation path, the transmission mechanism of the carrying assembly 120 to drive the electrode assembly 24 to move along the linear path F, the transmission mechanism of the moving assembly 110 to drive the housing 21 and the guiding member 210 to move away from each other on the linear path F, and the transmission mechanism of the shifting assembly 200 to drive the guiding member 210 to rotate.

There may be one or more interpolation paths, which may be specifically set based on the actual situation. The linear path F may be a movement path extending in the direction of gravity. In the embodiments, the electrode assembly 24 carried by the carrying assembly 120 may be located below the housing 21 in the direction of gravity, and the guiding member 210 may also be located above the housing 21 in the direction of gravity. The step of synchronously controlling, according to the interpolation path, the transmission mechanism of the carrying assembly 120 to drive the electrode assembly 24 to move along the linear path F and the transmission mechanism of the moving assembly 110 to drive the housing 21 and the guiding member 210 to move away from each other on the linear path F may include the following several implementations: the electrode assembly 24 and the guiding member 210 do not move on the linear path F, and the moving assembly 110 drives the housing 21 to move downward toward the electrode assembly 24; or the electrode assembly 24 does not move on the linear path F, and the moving assembly 110 drives the housing 21 to move downward while driving the guiding member 210 to move upward; or the housing 21 does not move on the linear path F, the moving assembly 110 drives the guiding member 210 to move upward, and the carrying assembly 120 drives the electrode assembly 24 to move upward; or the guiding member 210 does not move on the linear path F, the moving assembly 110 drives the housing 21 to move downward, and the carrying assembly 120 drives the electrode assembly 24 to move upward; or the moving assembly 110 drives the housing 21 to move downward while driving the guiding member 210 to move upward, and the carrying assembly 120 drives the electrode assembly 24 to move upward.

Therefore, according to the interpolation path, the transmission mechanism of the carrying assembly 120 is controlled to drive the electrode assembly 24 to move along the linear path F, and the transmission mechanism of the moving assembly 110 is controlled to drive the housing 21 and the guiding member 210 to move away from each other on the linear path F, such that the movement path of each assembly can be simplified, the reliability and precision of the motion control between the assemblies can be improved, and the smoothness of the entire tab-through process, the production efficiency, and the like can be improved.

Referring to FIG. 6, FIG. 6 is a schematic flowchart of control according to an interpolation path in an assembly method according to one or more embodiments of the present application. In the embodiments, the interpolation path may include a first interpolation path and a second interpolation path. The step of synchronously controlling, according to the interpolation path, the transmission mechanism of the carrying assembly 120 to drive the electrode assembly 24 to move along the linear path F, the transmission mechanism of the moving assembly 110 to drive the housing 21 and the guiding member 210 to move away from each other on the linear path F, and the transmission mechanism of the shifting assembly 200 to drive the guiding member 210 to rotate includes the following steps S601 and S602.

In step S601, according to the first interpolation path, the transmission mechanism of the carrying assembly is controlled to drive the electrode assembly to move along the linear path, the transmission mechanism of the moving assembly is controlled to drive the housing and the guiding member to move away from each other on the linear path, and the transmission mechanism of the shifting assembly is controlled to drive the guiding member to rotate, synchronously, until the tab part extends along the linear path in the accommodating cavity.

According to the first interpolation path, the transmission mechanism of the carrying assembly 120 can drive the electrode assembly 24 to move upward along the linear path F, and meanwhile, the transmission mechanism of the moving assembly 110 is controlled according to the first interpolation path to drive the housing 21 to move downward along the linear path F; or the transmission mechanism of the moving assembly 110 is controlled according to the first interpolation path to drive the guiding member 210 to move upward along the linear path F; or the transmission mechanism of the moving assembly 110 is controlled according to the first interpolation path to drive the guiding member 210 to move upward along the linear path F and drive the housing 21 to move downward along the linear path F. During the aforementioned movement process, the guiding member 210 remains in the accommodating cavity 22, and the guiding member 210 can also continue to rotate during this process, so as to drive the tab part 25 to rotate. After the tab part 25 extends along the linear path F in the accommodating cavity 22, the guiding member 210 may stop rotating, such that the tab part 25 remains in a state of extending along the linear path F.

In step S602, according to the second interpolation path, the guiding member is controlled to keep the tab part in a state of extending along the linear path, the transmission mechanism of the moving assembly is controlled to drive the housing and the guiding member to move away from each other on the linear path, and the transmission mechanism of the carrying assembly is controlled to drive the electrode assembly to move along the linear path, synchronously, until the tab part extends out of the accommodating cavity through the through hole.

The second interpolation path is different from the first interpolation path. After the guiding member 210 drives the tab part 25 to rotate until the tab part 25 extends along the linear path F in the accommodating cavity 22, the guiding member 210 may be controlled not to rotate or to slightly swing, such that the guiding member 210 keeps the tab part 25 in the state of extending along the linear path F. When the tab part 25 is in the state of extending along the linear path F, the transmission mechanism of the moving assembly 110 can be controlled according to the second interpolation path to drive the housing 21 to move downward along the linear path F; or the transmission mechanism of the moving assembly 110 can be controlled according to the second interpolation path to drive the guiding member 210 to move upward along the linear path F; or the transmission mechanism of the moving assembly 110 can be controlled according to the second interpolation path to drive the guiding member 210 to move upward along the linear path F and drive the housing 21 to move downward along the linear path F. Meanwhile, the transmission mechanism of the carrying assembly 120 can be controlled according to the second interpolation path to drive the electrode assembly 24 to move upward along the linear path F until the tab part 25 extends out of the accommodating cavity 22 through the through hole 23.

Therefore, the interpolation path includes the first interpolation path and the second interpolation path. The first-stage motion control may be performed on the transmission mechanism of the carrying assembly 120, the transmission mechanism of the shifting assembly 200, and the transmission mechanism of the moving assembly 110 by means of the first interpolation path, and the second-stage motion control may be performed on the transmission mechanism of the carrying assembly 120, the transmission mechanism of the shifting assembly 200, and the transmission mechanism of the moving assembly 110 by means of the second interpolation path. This can further improve the reliability and precision of the motion control between the assemblies, and improve the smoothness of the entire tab-through process, the production efficiency, and the like.

Further, the assembly method further includes: decoupling the virtual shaft from the transmission mechanism of the moving assembly 110 and from the transmission mechanism of the shifting assembly 200; and controlling, in a decoupled state, the transmission mechanism of the moving assembly 110, the transmission mechanism of the shifting assembly 200, and the transmission mechanism of the carrying assembly 120 to reset.

After the tab part 25 extends out of the accommodating cavity 22 through the through hole 23, the entire tab-through device 10 needs to be reset to facilitate the next tab-through operation. The reset process requires low action precision and synchronization between the transmission mechanisms of the assemblies, and the difference in actions between the transmission mechanisms of the assemblies in the reset process may be large. Therefore, it is necessary to first decouple the virtual shaft from the transmission mechanism of the moving assembly 110 and from the transmission mechanism of the shifting assembly 200. After the decoupling is completed, the transmission mechanism of the moving assembly 110, the transmission mechanism of the shifting assembly 200, and the transmission mechanism of the carrying assembly 120 are controlled to perform the reset operation, thereby facilitating the rapid reset of each transmission mechanism.

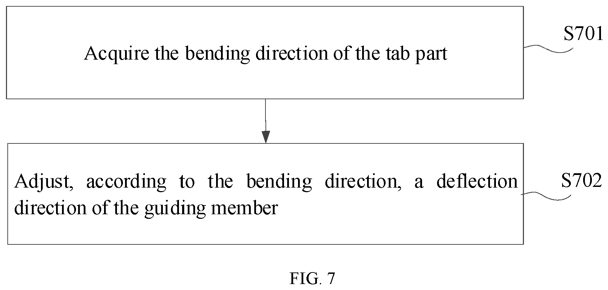

Referring to FIG. 7, FIG. 7 is a schematic flowchart of the assembly method shown in FIG. 5 before step S501. Specifically, the following steps S701 and S702 are included.

In step S701, the bending direction of the tab part is acquired.

An image of the tab part 25 may be acquired by an image acquisition device, and then the image of the tab part 25 is analyzed to determine the bending direction of the tab part 25. As shown in FIG. 4, the free end of the tab part 25 is inclined to the left relative to the fixed end. In other embodiments, the free end of the tab part 25 may be inclined to the right relative to the fixed end, which may be specifically determined based on the actual situation.

In step S702, a deflection direction of the guiding member is adjusted according to the bending direction.

The deflection direction of the guiding member 210 may be understood as: the free end of the guiding member 210 is inclined to the left or to the right relative to the fixed end of the guiding member 210. The deflection direction of the guiding member 210 may be preferentially adjusted according to the bending direction before the guiding member 210 extends into the housing 21, and then the guiding member 210 is enabled to extend into the housing 21 according to the adjusted deflection direction. Alternatively, the deflection direction of the guiding member 210 may be adjusted according to the bending direction after the guiding member 210 extends into the housing 21. Taking FIG. 4 as an example, when the free end of the tab part 25 is inclined to the left relative to the fixed end, the free end of the guiding member 210 may be adjusted to incline to the left relative to the fixed end of the guiding member 210; when the free end of the tab part 25 is inclined to the right relative to the fixed end, the free end of the guiding member 210 may be adjusted to incline to the right relative to the fixed end of the guiding member 210, such that the guiding member 210 and the tab part 25 are disposed in a staggered manner. As a result, the tab part 25 can easily overlap onto the surface of the guiding member 210, thereby enabling the guiding member 210 to guide the tab part 25 during the process of inserting the electrode assembly 24 into the housing. This effectively reduces the assembly difficulty of the battery 20, effectively improves the assembly efficiency and the yield rate of the battery 20, improves the reliability of the deflection adjustment of the tab, and improves the smoothness of the entire tab-through process, the production efficiency, and the like.

Further, the step of acquiring the bending direction of the tab part 25 (step S702) includes: determining, in a state where the moving apparatus 100 and the shifting assembly 200 are at an initial position, whether the housing 21 and the electrode assembly 24 are at a station; and acquiring, in response to whether the housing 21 and the electrode assembly 24 are at the station, the bending direction of the tab part 25. The state where the moving apparatus 100 and the shifting assembly 200 are at the initial position can be understood as a position where the moving apparatus 100 and the shifting assembly 200 complete the reset operation, and operations such as placing the housing 21 and the electrode assembly 24 can be performed at this position. When it is determined that the housing 21 and the electrode assembly 24 are at the station, the step of acquiring the bending direction of the tab part 25 can be performed. Therefore, the bending direction of the tab part 25 is acquired after the determination of whether the housing 21 and the electrode assembly 24 are at the station, which makes the entire process of the tab-through device 10 smoother and more reliable, thereby improving the overall working efficiency.

In summary, the shifting assembly 200 and the moving apparatus 100 are controlled to move, such that the tab part 25 extends out of the accommodating cavity 22 through the through hole 23. Without affecting or damaging the housing 21 and the tab part 25, the tab part 25 can be automatically and smoothly guided into the through hole 23, such that the tab part 25 can smoothly extend out of the housing 21. Moreover, the shifting assembly 200 and the moving apparatus 100 move synchronously, such that during the process of the moving apparatus 100 changing the relative positions of the housing 21, the electrode assembly 24, and the guiding member 210, the guiding member 210 rotates in the accommodating cavity 22 to change the bending direction of the tab part 25. This can effectively improve the working stability and reliability during the movement, effectively reduce the assembly difficulty of the battery 20, and effectively improve the assembly efficiency, the yield rate, and the like of the battery 20.

The assembled battery 20 according to the present application can be applied to an electric apparatus. The electric apparatus may include, but is not limited to, a mobile phone, a tablet, a laptop computer, an electric toy, an electric tool, an electric bicycle, an electric vehicle, a ship, a spacecraft, and the like. The electric toy may include a stationary or mobile electric toy, such as a game console, an electric vehicle toy, an electric ship toy, or an electric airplane toy. The spacecraft may include an airplane, a rocket, a space shuttle, a spaceship, and the like. The electric apparatus may provide electric energy via the battery 20 to achieve corresponding functions.

When the electric apparatus is a vehicle, the vehicle may be a fuel vehicle, a gas vehicle, or a new energy vehicle. The new energy vehicle may be a pure electric vehicle, a hybrid vehicle, an extended-range vehicle, or the like. The battery 20 is disposed inside the vehicle, and the battery 20 may be disposed at the bottom, head, or rear of the vehicle. The battery 20 may be configured to supply power to the vehicle. For example, the battery 20 may serve as an operation power source for the vehicle. The vehicle may further include a controller and a motor. The controller is configured to control the battery 20 to supply power to the motor, e.g., for operation power needed for starting, navigating, and driving of the vehicle.

In some embodiments of the present application, the battery 20 may not only serve as an operation power source for the vehicle, but also as a driving power source for the vehicle to, replacing or partially replacing fuel or natural gas, provide driving power for the vehicle 1.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. An assembly method for a battery, implemented on a tab-through device, wherein the assembly method comprises:
controlling a moving apparatus and a shifting assembly of the tab-through device to be at a preparation station, wherein the shifting assembly comprises a guiding member, and the moving apparatus is configured to drive the guiding member and a housing and an electrode assembly of the battery to move relative to each other; the housing is provided with an accommodating cavity, a through hole communicating the accommodating cavity with an outside is formed in the housing, the electrode assembly is provided with a tab part, and the guiding member is capable of extending into the through hole to come into contact with the tab part; and
controlling the shifting assembly and the moving apparatus to move synchronously, such that during a process of the moving apparatus changing relative positions of the housing, the electrode assembly, and the guiding member, the guiding member rotates in the accommodating cavity to change a bending direction of the tab part, thereby enabling the tab part to extend out of the accommodating cavity through the through hole.

2. The assembly method according to claim 1, wherein the moving apparatus comprises a carrying assembly and a moving assembly, the carrying assembly is configured to drive the electrode assembly to move, and the moving assembly is configured to drive the housing and the guiding member to move relative to each other; the step of controlling the shifting assembly and the moving apparatus to move synchronously comprises:
controlling, by using the virtual shaft, a transmission mechanism of the carrying assembly, a transmission mechanism of the moving assembly, and a transmission mechanism of the shifting assembly to move synchronously.

3. The assembly method according to claim 2, wherein the step of controlling, by using the virtual shaft, the transmission mechanism of the carrying assembly, the transmission mechanism of the moving assembly, and the transmission mechanism of the shifting assembly to move synchronously comprises:
coupling the virtual shaft to the transmission mechanism of the moving assembly, and coupling the virtual shaft to the transmission mechanism of the shifting assembly;
performing, by using the virtual shaft, linear interpolation on the transmission mechanism corresponding to the carrying assembly to obtain an interpolation path; and
controlling, according to the interpolation path, the transmission mechanism of the carrying assembly, the transmission mechanism of the moving assembly, and the transmission mechanism of the shifting assembly to move synchronously.

4. The assembly method according to claim 3, wherein the step of controlling, according to the interpolation path, the transmission mechanism of the carrying assembly, the transmission mechanism of the moving assembly, and the transmission mechanism of the shifting assembly to move synchronously comprises:
synchronously controlling, according to the interpolation path, the transmission mechanism of the carrying assembly to drive the electrode assembly to move along a linear path, the transmission mechanism of the moving assembly to drive the housing and the guiding member to move away from each other on the linear path, and the transmission mechanism of the shifting assembly to drive the guiding member to rotate.

5. The assembly method according to claim 4, wherein the interpolation path comprises a first interpolation path and a second interpolation path;
the step of synchronously controlling, according to the interpolation path, the transmission mechanism of the carrying assembly to drive the electrode assembly to move along the linear path, the transmission mechanism of the moving assembly to drive the housing and the guiding member to move away from each other on the linear path, and the transmission mechanism of the shifting assembly to drive the guiding member to rotate comprises:
synchronously controlling, according to the first interpolation path, the transmission mechanism of the carrying assembly to drive the electrode assembly to move along the linear path, the transmission mechanism of the moving assembly to drive the housing and the guiding member to move away from each other on the linear path, and the transmission mechanism of the shifting assembly to drive the guiding member to rotate until the tab part extends along the linear path in the accommodating cavity; and
synchronously controlling, according to the second interpolation path, the guiding member to keep the tab part in a state of extending along the linear path, the transmission mechanism of the moving assembly to drive the housing and the guiding member to move away from each other on the linear path, and the transmission mechanism of the carrying assembly to drive the electrode assembly to move along the linear path until the tab part extends out of the accommodating cavity through the through hole.

6. The assembly method according to claim 5, wherein the assembly method further comprises:
decoupling the virtual shaft from the transmission mechanism of the moving assembly and from the transmission mechanism of the shifting assembly; and
controlling, in a decoupled state, the transmission mechanism of the moving assembly, the transmission mechanism of the shifting assembly, and the transmission mechanism of the carrying assembly to reset.

7. The assembly method according to any one of claims 1 to 6, wherein before the step of controlling the moving apparatus and the shifting assembly to be at the preparation station, the assembly method comprises:
acquiring the bending direction of the tab part; and
adjusting, according to the bending direction, a deflection direction of the guiding member.

8. The assembly method according to claim 7, wherein the step of acquiring the bending direction of the tab part comprises:
determining, in a state where the moving apparatus and the shifting assembly are at an initial position, whether the housing and the electrode assembly are at a station; and
acquiring, in response to whether the housing and the electrode assembly are at the station, the bending direction of the tab part.

9. The assembly method according to claim 3, wherein the step of performing, by using the virtual shaft, the linear interpolation on the transmission mechanism corresponding to the carrying assembly comprises:
performing, by using the virtual shaft, the linear interpolation on the transmission mechanism corresponding to the carrying assembly when the virtual shaft is at an origin.

10. A tab-through device, wherein the tab-through device comprises:
a moving apparatus, configured to drive a housing and an electrode assembly of a battery to move relative to each other, wherein the housing is provided with an accommodating cavity, a through hole communicating the accommodating cavity with an outside is formed in the housing, and the electrode assembly is provided with a tab part;
a shifting assembly, comprising a guiding member, wherein the guiding member is capable of extending into the through hole to come into contact with the tab part, and the moving apparatus is further configured to drive the guiding member, the housing, and the electrode assembly to move relative to each other; and
a controller, configured to perform the assembly method according to any one of claims 1 to 9, such that the tab part extends out of the accommodating cavity through the through hole.
